# EUROPEAN PATENT SPECIFICATION

(11) **EP 4 040 624 B1**
(45) Date of publication and mention of the grant of the patent: **07.06.2023**
(21) Application number: 21155174.2
(22) Date of filing: 04.02.2021
(51) Int. Cl.: H02J 7/00, H02J 50/12, H02J 50/80

(54) **WASTE CURRENT SENSOR FOR ADAPTIVE WIRELESS CHARGING**
ABFALLSTROMSENSOR FÜR ADAPTIVES DRAHTLOSES LADEN
CAPTEUR DE COURANT RÉSIDUEL POUR RECHARGE SANS FIL ADAPTATIVE

(43) Date of publication of application: 10.08.2022
(73) Proprietor: Panthronics AG, 8041 Graz (AT)
(72) Inventor: Schlager, Tobias, 8041 Graz (AT); Pieber, Michael, 8041 Graz (AT); Goitre, Alessandro, 8041 Graz (AT); Antonetti, Francesco, 8041 Graz (AT)
(74) Representative: Schwarz & Partner Patentanwälte GmbH

(56) References cited:
- WO-A1-2014/112019
- US-A1- 2020 076 249
- US-A1- 2020 203 980
- US-B2- 9 356 659

## Description

### FIELD OF THE INVENTION

The present invention relates to a system of a power device and a portable device for wireless charging of a battery of the portable device, which power device comprises an antenna to receive power adjustment information from the portable device to increase or to decrease the power of the magnetic field emitted by the antenna of the power device and which portable device comprises an antenna exposed to the magnetic field and connected via a matching stage to a rectifier stage, to rectify an antenna signal, and which portable device comprises a voltage limiter, to limit the rectified antenna signal, and to provide an input voltage at an input pin of a charger IC, which provides a first charge current at an output pin connected to the battery to charge the battery for a first period of time as power source with a constant first charge current.

### BACKGROUND OF THE INVENTION

Wireless charging is used for all kind of different portable devices like a mobile phone or earphones. The portable device just has to be dropped close-by a power device that generates and radiates a magnetic field via an antenna of the power device with the advantage that no wire is needed to charge the portable device. In some of these systems, the power device just radiates the magnetic field and some newer systems comprise a feedback loop from the portable device to the power device to set the power of the magnetic field.

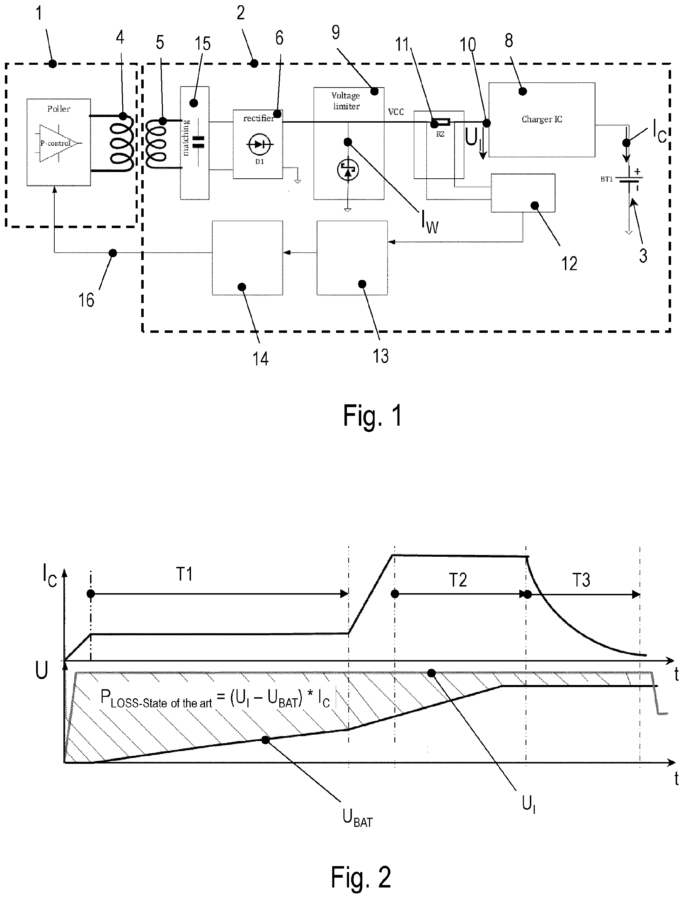

Figure 1 shows such a system of a power device 1 and a portable device 2 with a battery 3, know to a person skilled in the art. Such a system is for instance described in the NFC Forum^{™} Technical Specification Version 1.0. The power device 1 called "poller" comprises an antenna 4 that radiates a magnetic field with the frequency of 13,56MHz. The portable device 2 called "listener" comprises an antenna 5 exposed to the magnetic field emitted by the power device 1. A matching circuit 15 matches the impedance of the output pins of the antenna 5 to input pins of a rectifier 6 that uses a bridge rectifier to rectify the antenna signal and to provide the rectified antenna signal to a voltage limiter 9.

A charger IC 8 of the portable device 2 is used to charge the battery 3. As the charger IC 8 needs a input voltage U_{I} to power charger IC 8 of 5V +/- 10% voltage, limiter 9 is used to limit the voltage of the rectified antenna signal provided by rectifier 6 to an appropriate input voltage U_{I} at an input pin 10 of charger IC 8.

Battery 3 is a Li-Ion battery that needs to be charged by charger IC 8 in different time periods with different charge currents Ic and charge voltages. To achieve that, the portable device 2 comprises a serial ohmic resistance component 11 in the path between the voltage limiter 9 and input pin 10 to generate a measuring voltage, which is measured by current measurement stage 12 to measure the input current of charger IC 8, which is more or less the charge current Ic at the output pin of charger IC 8 to charge the battery 3. The portable device 2 furthermore comprises a digital control stage 13 that generates a power adjustment information 16 in case the input voltage U_{I} at input pin 10 and/or the charge current Ic to charge the battery 3 are too low or too high. Such power adjustment information 16 is provided by the digital control stage 13 to a Cless Communication stage 14, which complies to the NFC communication protocol to communicate the power adjustment information 16 to the power device 1. With this feedback loop from portable device 2 to power device 1, digital control stage 13 can request more or less power in the magnetic field provided by the power device 1.

Figure 2 shows a time diagram of the charge current Ic in three different time periods T1, T2 and T3 to load battery 3. Figure 2 furthermore shows input voltage U_{I} at input pin 10 of charger IC 8 and the actual battery voltage U_{BAT} during the time periods T1, T2 and T3 to load battery 3. To actually load battery 3, only battery voltage U_{BAT} multiplied with charge current Ic is used. Therefore loss power P_{LOSS} = (U_{I} - U_{BAT}) * Ic is power that needs to be generated by power device 1 in the magnetic field and needs to be wasted in portable device 2 what at the end heats-up the junction temperature of portable device 2, what is a big disadvantage. In addition to that voltage limiter 9 deducts a waste current Iw to limit the voltage of the rectified antenna signal to provide the input voltage U_{I} of 5V +/- 10% at input pin 10 needed by charger IC 8. This waste current Iw is part of the loss power P_{LOSS} and heats-up the junction temperature of portable device 2.

If e.g. earphones should be loaded in a closed cabinet of a charger this heat generated by the loss power P_{LOSS} may cause damage of the earphones or the charger. If power device 1 is powered by a battery power pack, this wasted loss power P_{LOSS} furthermore reduces the number of load cycles possible with the battery power pack.

US9,356,659B2 discloses a wireless charging system with a closed loop control and regulation between the receiver and the charger based on a power or voltage measured in the receiver.

US 2020/0076249 A1 discloses a wireless charging system that regulates the power transferred from the wireless power TX to the wireless power RX and charger by gradually increasing the voltage during a first charging state.

### SUMMARY OF THE INVENTION

It is an object of the invention to provide a system of a power device and a portable device for wireless charging of the battery of the portable device with a feedback loop to reduce the wasted loss power P_{LOSS} and the junction temperature of portable device.

This object is achieved in a system with a voltage limiter that comprises a current sensor positioned in series to the voltage limiter to sense the waste current deducted from the rectified antenna signal to limit the input voltage of the charger IC and that the portable device comprises a charge voltage control stage, that is built to generate the power adjustment information for the power device to increase or to decrease the power of the magnetic field emitted by the antenna of the power device to steer the waste current within an upper limit and a lower limit.

This inventive concept enables a substantial reduction of the loss power P_{LOSS} as only as much power as needed to actually charge the battery is requested from and delivered by the power device in the magnetic field. This is achieved, because the measurement of the waste current in the voltage limiter is a direct indicator how much of the power received in the portable device cannot be used at the moment to charge the battery. The feedback loop from the portable device to the power device to request more or less power in the magnetic field based on the waste current enables a substantial reduction of wasted loss power P_{LOSS} and a substantial reduction of the junction temperature of the portable device. A lower limit for the waste current is defined to ensure that charger IC always gets the input voltage needed to avoid a low power reset of the charger IC, what would interrupt the charging process of the battery. An upper limit of the waste current is defined to keep the loss power P_{LOSS} in an acceptable low range. The waste current will change depending on different parameters like the actual charge current provided by the charger IC to the battery and the power in the magnetic field provided by the power device and the quality of the antenna coupling between the antennas of the power device and the portable device. It is advantageous to define a hysteresis function between the upper and lower limit of the waste current to ensure a stable operation of the charging process in the portable device.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system known to a person skilled in the art, which system comprises a power device and a portable device with a battery to be charged wireless.
Figure 2 shows a time diagram of the charge current to charge the battery and an input voltage of a charger IC of the portable device of the system according to figure 1.
Figure 3 shows a system according to the invention, which comprises a power device and a portable device with a battery to be charged wireless.
Figure 4 shows an implementation of the current sensor of the voltage limiter according to figure 3.
Figure 5 shows a discrete implementation of the current sensor of the voltage limiter according to figure 3.
Figure 6 shows a time diagram of the charge current to charge the battery and an input voltage of a charger IC of the portable device of the system according to figure 3.

### DETAILED DESCRIPTION OF EMBODIMENTS

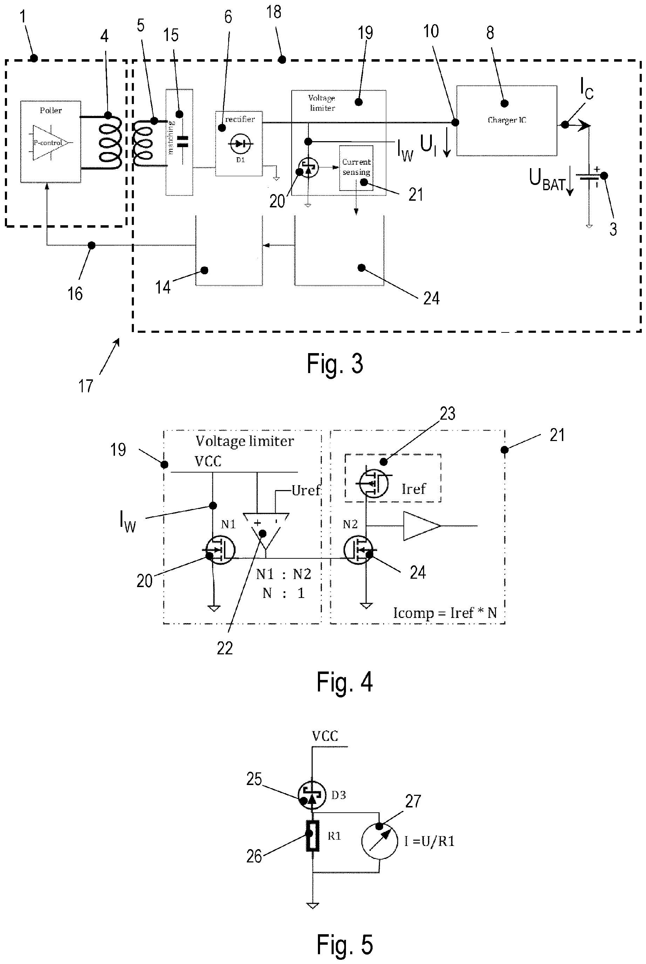

Figure 3 shows a first embodiment of a system 17 of a power device 1 and a portable device 18 with a battery 3 according to the invention. The same reference signs are used for stages that have the same technical function as already described in the system of figure 1, known to a person skilled in the art. The power device 1 called "poller" comprises an antenna 4 that radiates a magnetic field with the frequency of 13,56MHz. Power device 1 could be a charging device connected to the power grid or powered by a battery power pack. The portable device 18 called "listener" comprises an antenna 5 exposed to the magnetic field emitted by power device 1. The portable device 18 could be any device like e.g. earphones or a mobile phone with a wireless interface and a battery. A matching circuit 15 matches the impedance of the output pins of the antenna 5 to input pins of a rectifier 6 that uses a bridge rectifier to rectify the antenna signal from antenna 5 and to provide a DC voltage as input voltage Ur at a charger IC 8.

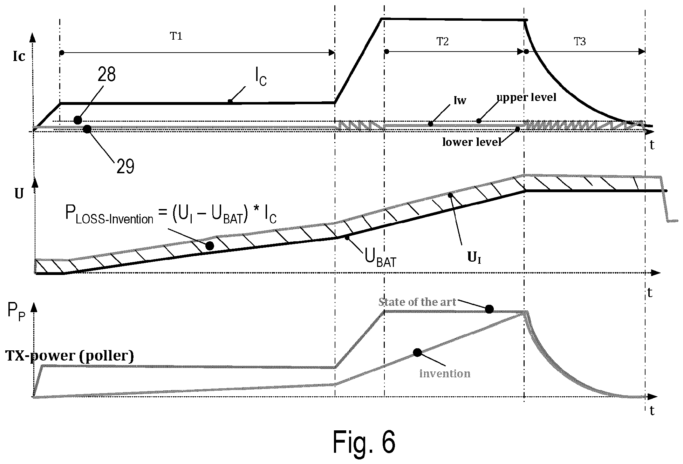

Battery 3 is a Li-Ion battery that needs to be charged by charger IC 8 in different time periods with different charge currents I_{C} and charge voltages. Figure 6 shows a time diagram of the charge current Ic in three different time periods T1, T2 and T3 to load battery 3 with the system according to figure 3. In the first time period T1 at the beginning of the charging process charger IC 8 charges the battery 3 with a constant first charge current Ic as power source, which first charge current Ic is about 10% of the maximal charge current Ic to be used for the particular battery 3. After the actual voltage U_{BAT} of battery 3 achieved a voltage U_{T1-T2} charging in the second time period T2 starts wherein charger IC 8 charges the battery 3 with a constant second charge current Ic as power source, which second charge current Ic is higher than the first charge current and close to 100% of the maximal charge current Ic to be used for the particular battery 3. In the third time period T3, after the actual voltage U_{BAT} of the battery 3 achieved it's target voltage, the charging mode is switched to constant voltage charging and charge current Ic is decreasing automatically according to the battery's charging condition until the charger stops charging e.g. when the charging current has decreased to 10% of the maximum charging current. The principle to load a Li-Ion battery in time periods is known to a person skilled in the art, the invention is provided by the feedback loop based on the waste current I_{W}.

Portable device 18 furthermore comprises a Cless Communication stage 14, which complies to the NFC communication protocol to communicate the power adjustment information 16 from a charge voltage control stage 24 to power device 1. With this feedback loop from portable device 24 to power device 1, portable device 18 can request more or less power P_{P} in the magnetic field provided by the power device 1.

Portable device 18 furthermore comprises a voltage limiter 19, to limit the rectified antenna signal from antenna 5, and to provide the input voltage Ur at an input pin 10 of charger IC 8. Voltage limiter 19 comprises a MOS Fet 20 parallel to battery 3 that deducts a waste current I_{W} from the rectified antenna signal to limit the input voltage U_{I} of the charger IC 8. Voltage limiter 19 furthermore comprises a current sensor 21 to sense the amount of the waste current I_{W} that only heats-up portable device 18. Figure 4 shows an implementation of the current sensor 21 and voltage limiter 19 according to figure 3. Voltage limiter 19 comprises an operational amplifier 22 that compares a reference voltage U_{ref} to the voltage of the rectified antenna signal from rectifier 6 and steers basis pin of MOS Fet 20 that deducts waste current I_{W} from the rectified antenna signal and therefore limits the rectified antenna signal to input voltage U_{I} at charger IC 8. Current sensor 21 comprises a constant current source 23 which provides I_{ref}. This I_{ref} is compared to the current in the MOS Fet 24 which is a replica of MOS Fet 20. The Current in MOS Fet 24 is the current in MOS Fet 20 divided by the W/L ratio of this two devices. If both devices are made out of unity devices, the ratio is the number of unity devices used for MOS Fet 20 divided by the number of unity devices used for MOS Fet 24 with the ratio N = N1 / N2. Figure 5 shows a possible solution of such a current sensor 21 used in a listener device that is built with discrete components. The circuit is based on a Zener diode 25, which defines the voltage U_{I}, a resistor 26 and a measuring device 27 to measure the voltage drop on the resistor 26 based on the current that is flowing. The waste current I_{W} equals I_{W} = U_{R1} / R1.

Charge voltage control stage 24 of portable device 18 is built to generate the power adjustment information 16 for the power device 1 to increase or to decrease the power P_{P} of the magnetic field emitted by the antenna 4 of the power device 1 to steer the waste current Iw within an upper limit 28 and a lower limit 29. A lower limit 29 for the waste current Iw is defined to ensure that charger IC 8 always gets the input voltage Ui needed to avoid a low power reset of the charger IC 8, what would interrupt the charging process of the battery 3. The upper limit 28 of the waste current Iw is defined to keep the loss power P_{LOSS} that is received within the portable device 18, but at the moment cannot be used to charge battery 3 and has to be transformed into heat, in an acceptable low range. The waste current Iw will change depending on different parameters like the actual charge current Ic provided by the charger IC 8 to the battery 3 and the power in the magnetic field provided by the power device 1 and the quality of the antenna coupling between the antennas 4 and 5 of the power device 1 and the portable device 18. Charge voltage control stage 24 observes whether the actual waste current I_{W} sensed by current sensor 21 is within the upper limit 28 and lower limit 29 and if not sends a power adjustment information 16 to power device 1 to increase or decrease the power P_{P} in the magnetic field of antenna 4.

The feedback loop from the portable device 18 to the power device 1 to request more or less power in the magnetic field based on the waste current Iw enables a substantial reduction of wasted loss power P_{LOSS} and a substantial reduction of the junction temperature of the portable device 18. The portable device 2 according to the state of the art in figure 1 bases this feedback loop on the sensed input voltage U_{I} at input pin 10 and/or the charge current Ic to charge the battery 3, but this information does not incorporate how much waste current Iw has already been deducted to limit the input voltage U_{I}.

In a preferred embodiment the charge voltage control stage 24 generates a power adjustment information 16 to decrease the power P_{P} of the magnetic field emitted by the antenna 4 of the power device 1, if the waste current Iw increases towards the upper limit 28. In the same or another preferred embodiment the charge voltage control stage 24 generates a power adjustment information 16 to increase the power P_{P} of the magnetic field emitted by the antenna 4 of the power device 1, if the waste current Iw decreases towards the lower limit. As the feedback loop from the portable device 18 to power device 1, to change the power generated in the magnetic field of antenna 4, takes some time to take effect for the power received within portable device 18, it is advantageous to initiate this change already before the limit is reached. It is furthermore advantageous to define a hysteresis function between the upper limit 28 and lower limit 29 of the waste current Iw to ensure a stable operation of the charging process in the portable device 18.

Furthermore inventive portable device 18 of figure 3 compared with the known portable device 2 of figure 1 comprises the advantage that the current path of the antenna signal from the rectifier stage 6 to the charger IC 8 is free of a serial ohmic resistance component. This is possible as there is no need to measure the current going to the charger for regulation.

In a further embodiment of the invention voltage limiter 19 and/or current sensor 21 could be realized by different hardware and software components to enable the inventive principle to steer the power device 1 to increase or to decrease the power P_{P} of the magnetic field to achieve the input voltage U_{I} of the charger IC 8 by keeping the waste current Iw essentially all the time within the upper limit 28 and lower limit 29.

By reducing power loss on the listener side an additional advantage achieved is, that the PCB size can be reduced, because there is no need to achieve such a low temperature coefficient to get rid of the heat compared to the state of the art solution. This reduced power loss is furthermore advantageous if power device 1 is powered by a battery power pack only and needs to reduce its own power consumption.

## Claims

1. System (17) of a power device (1) and a portable device (18) for wireless charging of a battery (3) of the portable device (18), which power device (1) comprises an antenna (4) to receive power adjustment information (16) from the portable device (18) to increase or to decrease the power (P_{P}) of the magnetic field emitted by the antenna (4) of the power device (1) and which portable device (18) comprises an antenna (5) exposed to the magnetic field and connected via a matching stage (15) to a rectifier stage (6), to rectify an antenna signal, and which portable device (18) comprises a voltage limiter (19), to limit the rectified antenna signal, and to provide an input voltage (Ur) at an input pin (10) of a charger IC (8), which provides a first charge current (Ic) at an output pin connected to the battery (3) to charge the battery (3) for a first period of time (T1) as power source with a constant first charge current (I_{C}) **characterized in, that** the voltage limiter (19) comprises a current sensor (21) positioned in series to the voltage limiter (19) configured to sense a waste current (I_{W}) deducted from the rectified antenna signal to limit the input voltage (U_{I}) of the charger IC (8) and that the portable device (18) comprises a charge voltage control stage (24), that is built to generate the power adjustment information (16) for the power device (1) to increase or to decrease the power of the magnetic field emitted by the antenna (4) of the power device (1) to steer the waste current (I_{W}) within an upper limit (28) and a lower limit (29).

2. System (17) according to claim 1, wherein the charge voltage control stage (24) is configured to generate a power adjustment information (16) to decrease the power (P_{P}) of the magnetic field emitted by the antenna (4) of the power device (1), if the waste current (I_{W}) increases towards the upper limit.

3. System (17) according to claim 1 or 2, wherein the charge voltage control stage (24) is configured to generate a power adjustment information (16) to increase the power (P_{P}) of the magnetic field emitted by the antenna (4) of the power device (1), if the waste current (I_{W}) decreases towards the lower limit.

4. System (17) according to claim 2 and 3, wherein the charge voltage control stage (24) is configured to use rrses the difference of the upper limit (28) and the lower limit (29) as hysteresis to optimize the interval of the performed power adjustment steps and the power loss (P_{LOSS}) produced by the waste current (I_{W})..

5. System (17) according to any of the claims 1 to 4, wherein the current path from the rectifier stage (6) to the charger IC (8) is free of a serial ohmic resistance component.

6. System (17) according to any of the claims 1 to 5, which charger IC (8) is built to provide a second charge current (Ic) at the output pin to charge the battery (3) for a second period of time (T2) as power source with the constant second charge current (Ic), which is higher than the first charge current (Ic).

7. System (17) according to any of the claims 1 to 6, which power device (1) is powered by a battery power pack.

8. Method of a power device (1) and a portable device (18) for wireless charging of a battery (3) of the portable device (18) with a system (17) according to any of the claims 1 to 7 **characterized in, that** the sensed waste current (Iw) deducted from the rectified antenna signal to limit the input voltage (U_{I}) of the charger IC (8) is used in a feedback loop to the power device (1) to increase or to decrease the power (P_{P}) of the magnetic field emitted by the antenna (4) of the power device (1) to steer the waste current (Iw) within an upper limit (28) and a lower limit (29).

## Patentansprüche

1. System (17) aus einem Leistungsgerät (1) und einem tragbaren Gerät (18) zum kabellosen Aufladen einer Batterie (3) des tragbaren Geräts (18), wobei das Leistungsgerät (1) eine Antenne (4) umfasst, um Leistungsanpassungsinformationen (16) von dem tragbaren Gerät (18) zu empfangen, um die Leistung (P_{P}) des von der Antenne (4) des Leistungsgeräts (1) emittierten Magnetfelds zu erhöhen oder zu verringern, und wobei das tragbare Gerät (18) eine Antenne (5) umfasst, die dem Magnetfeld ausgesetzt und über eine Anpassungsstufe (15) mit einer Gleichrichterstufe (6) verbunden ist, um ein Antennensignal gleichzurichten, und wobei das tragbare Gerät (18) einen Spannungsbegrenzer (19) umfasst, um das gleichgerichtete Antennensignal zu begrenzen und um eine Eingangsspannung (Ui) an einem Eingangsstift (10) eines Lade-IC (8) bereitzustellen, der einen ersten Ladestrom (Ic) an einem mit der Batterie (3) verbundenen Ausgangsstift bereitstellt, um die Batterie (3) für eine erste Zeitspanne (T1) als Stromquelle mit einem konstanten ersten Ladestrom (Ic) aufzuladen, **dadurch gekennzeichnet, dass**
der Spannungsbegrenzer (19) einen Stromfühler (21) umfasst, der in Reihe mit dem Spannungsbegrenzer (19) positioniert ist und dazu konfiguriert ist, einen von dem gleichgerichteten Antennensignal zur Begrenzung der Eingangsspannung (U_{I}) des Lade-IC (8) abgezogenen Abfallstrom (Iw) zu erfassen, und dass das tragbare Gerät (18) eine Ladespannungssteuerstufe (24) umfasst, die zum Erzeugen der Leistungsanpassungsinformationen (16) für das Leistungsgerät (1) ausgebildet ist, um die Leistung des von der Antenne (4) des Leistungsgeräts (1) emittierten Magnetfelds zu erhöhen oder zu verringern, um den Abfallstrom (Iw) innerhalb einer oberen Grenze (28) und einer unteren Grenze (29) zu steuern.

2. System (17) gemäß Anspruch 1, wobei die Ladespannungssteuerstufe (24) dazu konfiguriert ist, Leistungsanpassungsinformationen (16) zu erzeugen, um die Leistung (P_{P}) des von der Antenne (4) des Leistungsgeräts (1) emittierten Magnetfelds zu verringern, wenn der Abfallstrom (Iw) in Richtung der oberen Grenze ansteigt.

3. System (17) gemäß Anspruch 1 oder 2, wobei die Ladespannungssteuerstufe (24) dazu konfiguriert ist, Leistungsanpassungsinformationen (16) zu erzeugen, um die Leistung (P_{P}) des von der Antenne (4) des Leistungsgeräts (1) emittierten Magnetfelds zu erhöhen, wenn der Abfallstrom (Iw) in Richtung der unteren Grenze abnimmt.

4. System (17) gemäß Anspruch 2 und 3, wobei die Ladespannungssteuerstufe (24) dazu konfiguriert ist, die Differenz zwischen der oberen Grenze (28) und der unteren Grenze (29) als Hysterese zu verwenden, um das Intervall der durchgeführten Leistungsanpassungsschritte und den durch den Abfallstrom (Iw) erzeugten Leistungsverlust (P_{LOSS}) zu optimieren.

5. System (17) gemäß einem der Ansprüche 1 bis 4, wobei der Strompfad von der Gleichrichterstufe (6) zum Lade-IC (8) frei von einer seriellen ohmschen Widerstandskomponente ist.

6. System (17) gemäß einem der Ansprüche 1 bis 5, wobei der Lade-IC (8) zum Bereitstellen eines zweiten Ladestroms (Ic) am Ausgangsstift aufgebaut ist, um die Batterie (3) für eine zweite Zeitdauer (T2) als Stromquelle mit dem konstanten zweiten Ladestrom (I_{C}) aufzuladen, der höher als der erste Ladestrom (Ic) ist.

7. System (17) gemäß einem der Ansprüche 1 bis 6, wobei das Leistungsgerät (1) durch ein Batterie-Netzteil gespeist ist.

8. Verfahren eines Leistungsgeräts (1) und eines tragbaren Geräts (18) zum kabellosen Aufladen einer Batterie (3) des tragbaren Geräts (18) mit einem System (17) gemäß einem der Ansprüche 1 bis 7, **dadurch gekennzeichnet, dass** der erfasste Abfallstrom (Iw), der von dem gleichgerichteten Antennensignal zur Begrenzung der Eingangsspannung (U_{I}) des Lade-IC (8) abgezogen wurde, in einer Rückkopplungsschleife zu dem Leistungsgerät (1) verwendet wird, um die Leistung (P_{P}) des von der Antenne (4) des Leistungsgeräts (1) emittierten Magnetfelds zu erhöhen oder zu verringern, um den Abfallstrom (Iw) innerhalb einer oberen Grenze (28) und einer unteren Grenze (29) zu steuern.

## Revendications

1. Système (17) d'un dispositif de puissance (1) et d'un dispositif portable (18) pour charger sans fil une batterie (3) du dispositif portable (18), lequel dispositif de puissance (1) comprend une antenne (4) pour recevoir des informations d'ajustement de puissance (16) provenant du dispositif portable (18) afin d'augmenter ou de diminuer la puissance (P_{P}) du champ magnétique émis par l'antenne (4) du dispositif de puissance (1), et lequel dispositif portable (18) comprend une antenne (5) exposée au champ magnétique et connectée via un étage de mise en correspondance (15) à un étage de redresseur (6), pour redresser un signal d'antenne, et lequel dispositif portable (18) comprend un limiteur de tension (19), pour limiter le signal d'antenne redressé, et pour fournir une tension d'entrée (Ur) à une broche d'entrée (10) d'un circuit intégré de chargeur (8), qui fournit un premier courant de charge (I_{C}) à une broche de sortie connectée à la batterie (3) pour charger la batterie (3) pendant une première période de temps (T1) en tant que source de puissance avec un premier courant de charge constant (I_{C}), **caractérisé en ce que**
le limiteur de tension (19) comprend un capteur de courant (21) positionné en série par rapport au limiteur de tension (19), configuré pour détecter un courant résiduel (Iw) déduit du signal d'antenne redressé afin de limiter la tension d'entrée (Ur) du circuit intégré de chargeur (8), et **en ce que** le dispositif portable (18) comprend un étage de commande de tension de charge (24), qui est construit pour générer les informations d'ajustement de puissance (16) pour le dispositif de puissance (1) afin d'augmenter ou de diminuer la puissance du champ magnétique émis par l'antenne (4) du dispositif de puissance (1) pour diriger le courant résiduel (Iw) dans une limite supérieure (28) et une limite inférieure (29).

2. Système (17) selon la revendication 1, dans lequel l'étage de commande de tension de charge (24) est configuré pour générer une information d'ajustement de puissance (16) afin de diminuer la puissance (P_{P}) du champ magnétique émis par l'antenne (4) du dispositif de puissance (1), si le courant résiduel (Iw) augmente vers la limite supérieure.

3. Système (17) selon la revendication 1 ou 2, dans lequel l'étage de commande de tension de charge (24) est configuré pour générer une information d'ajustement de puissance (16) afin d'augmenter la puissance (P_{P}) du champ magnétique émis par l'antenne (4) du dispositif de puissance (1), si le courant résiduel (Iw) diminue vers la limite inférieure.

4. Système (17) selon les revendications 2 et 3, dans lequel l'étage de commande de tension de charge (24) est configuré pour utiliser la différence de la limite supérieure (28) et de la limite inférieure (29) comme hystérésis afin d'optimiser l'intervalle des étapes d'ajustement de puissance effectuées et la perte de puissance (P_{LOSS}) produite par le courant résiduel (Iw).

5. Système (17) selon l'une quelconque des revendications 1 à 4, dans lequel le trajet de courant depuis l'étage de redresseur (6) vers le circuit intégré de chargeur (8) est exempt d'une composante de résistance ohmique en série.

6. Système (17) selon l'une quelconque des revendications 1 à 5, lequel circuit intégré de chargeur (8) est construit pour fournir un second courant de charge (I_{C}) au niveau de la broche de sortie afin de charger la batterie (3) pendant une seconde période de temps (T2) en tant que source de puissance avec le second courant de charge constant (Ic), qui est supérieur au premier courant de charge (Ic).

7. Système (17) selon l'une quelconque des revendications 1 à 6, lequel dispositif de puissance(1) est alimenté par un bloc de puissance de batterie.

8. Procédé d'un dispositif de puissance (1) et d'un dispositif portable (18) pour charger sans fil une batterie (3) du dispositif portable (18) avec un système (17) selon l'une quelconque des revendications 1 à 7, **caractérisé en ce que** le courant résiduel détecté (Iw) déduit du signal d'antenne redressé pour limiter la tension d'entrée (Ur) du circuit intégré de chargeur (8) est utilisé dans une boucle de rétroaction vers le dispositif de puissance (1) pour augmenter ou diminuer la puissance (P_{P}) du champ magnétique émis par l'antenne (4) du dispositif de puissance (1) pour diriger le courant résiduel (Iw) à l'intérieur d'une limite supérieure (28) et d'une limite inférieure (29).
